# EUROPÄISCHE PATENTSCHRIFT

(11) **EP 0 552 722 B1**
(45) Veröffentlichungstag und Bekanntmachung des Hinweises auf die Patenterteilung: **11.09.1996**
(21) Anmeldenummer: 93100784.3
(22) Anmeldetag: 20.01.1993
(51) Int. Cl.: E01C 3/00, E01C 9/00

(54) **Material für den Unterbau von Strassen**
Material for the foundation of roads
Matériau de fondation de chaussées

(30) Priorität: 23.01.1992 DE 4201758
(43) Veröffentlichungstag der Anmeldung: 28.07.1993
(73) Patentinhaber: Weckler, Heinz, D-72760 Reutlingen (DE)
(72) Erfinder: Weckler, Heinz, D-72760 Reutlingen (DE)
(74) Vertreter: Möbus, Rudolf, Dipl.-Ing.

(56) Entgegenhaltungen:
- EP-A- 0 141 772

## Beschreibung

Die Erfindung betrifft ein Material für den Unterbau von mit Bäumen eingefaßten Straßen, Wegen und Parkflächen.

Der Unterbau von Straßen besteht üblicherweise aus einem Bett aus Schottersteinen, vorzugsweise Kalkbruchsteinen. Da dieses Schottersteinbett gut verdichtet ist, vor allem aber gut wasserdurchlässig bleibt, können am Rande einer Straße oder dergleichen und damit am Rande eines solchen Schotterbettes gepflanzte Bäume schlecht wurzeln. Dadurch besteht die Gefahr, daß die Bäume nur einen ungenügenden und meist ungleichmäßig verteilten Wurzelbereich entwickeln können, was zum Absterben der Bäume führen kann, sobald sie eine größere Höhe erreicht haben.

Zwar ist aus der EP-A-0 141 772 ein Verfahren zur Sanierung oder Neuanpflanzung von Bäumen bekannt, bei dem der Ernährungsbereich der Bäume auf den durch die Straßenoberfläche versiegelten Bereich ausgedehnt wird. Hierzu wird der Boden ausgekoffert und ein Auflockerungsmaterial, das Lava enthält, eingefüllt und anschließend die Versiegelungsfläche durch porige Platten gebildet. Dieses Verfahren begünstigt zwar das Wachstum der Bäume, doch kann das Verfahren allenfalls in nicht befahrenen Randbereichen einer Straße oder in Fußgängerzonen oder dergleichen eingesetzt werden. Zur Bestreitung des Unterbaus einer Straße eignet sich das Substrat dieser Entgegenhaltung jedoch nicht.

Der Erfindung liegt die Aufgabe zugrunde, dem vorstehend genannten Übelstand abzuhelfen und einen Unterbau für Straßen, Wege oder Parkflächen zu schaffen, dessen Zusammensetzung eine Wurzelbildung von Bäumen in diesem Unterbau begünstigt.

Die gestellte Aufgabe wird mit einem Unterbau-Material gelöst, bei welchem erfindungsgemäß zur Erzielung einer guten Durchwurzelbarkeit den üblichen Schottersteinen Bruchsteine aus offenporiger Lava, Steinwolle und in die Hohlräume des Schotterbettes verdichtbares organisches Material beigefügt sind.

Das Beifügen von offenporiger Lava und Steinwolle erhöht das Rückhaltevermögen des Unterbaus für Wasser, was eine erste Voraussetzung dafür ist, daß ein Baum Wurzeln in den Unterbau schiebt. Durch das Beifügen von organischem Material, das sich in die zwischen den Bruchsteinen auch beim Verdichten des Unterbaus verbleibenden Hohlräume verdrängen läßt, werden den Baumwurzeln zusätzlich Nährstoffe angeboten. Dieses Angebot kann durch den Zusatz organischer und/oder mineralischer Dünger noch erweitert werden. Als verdichtbares organisches und für den Unterbau auch bei Frostbildung verträgliches Material eignet sich insbesondere Rindenhumus.

Die Volumen- oder Gewichtsanteile der einzelnen Zusatzmaterialien mit den vorstehend genannten Eigenschaften können in Anpassung an die am Einsatzort herrschenden geologischen Verhältnisse und klimatischen Bedingungen (Niederschlagshäufigkeit, Frosthäufigkeit und -stärke) oder an die unterschiedlichen Wurzelstrukturen der Baumarten unterschiedlich gewählt werden.

Da die gute Durchwurzelbarkeit des Unterbaus auch von einer guten und gleichmäßigen Vermischung der einzelnen Materialbestandteile abhängt, kann das Unterbau-Material an einer Fertigungsstätte vorgemischt und in von Draht oder anderem Netzmaterial umschlossenen Einbaueinheiten vorgemischt zum Einsatzort gebracht werden, wo diese Einbaueinheiten zur Bildung des Unterbaus aneinander und/oder übereinander gesetzt und unbeschadet der gewählten und eine Durchwurzelung nicht behindernden Ummantelung mittels einer Walze verdichtet werden können.

Unterbau-Material gemäß der Erfindung muß nicht den gesamten Unterbau einer Straße oder eines Parkplatzes bilden. Seine Anwendung kann auch auf Randstreifen von mit Bäumen besäumten Straßen und Plätzen beschränkt sein.

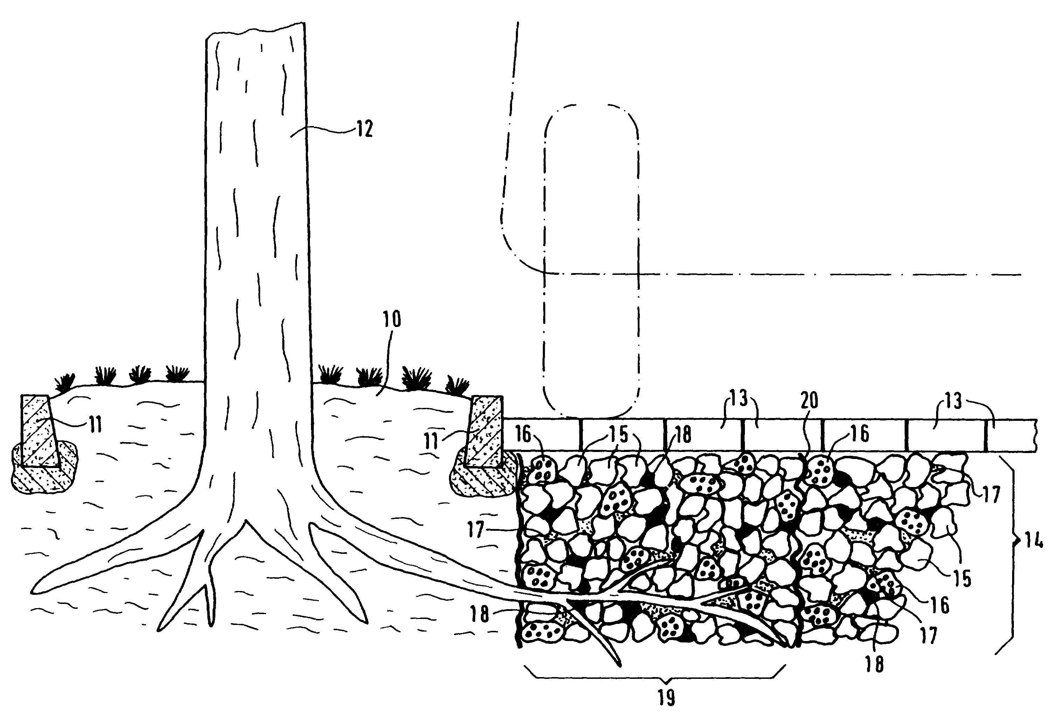

Nachfolgend wird ein Ausführungsbeispiel für ein Unterbau-Material anhand der beiliegenden Zeichnung näher erläutert, welche einen schematischen Querschnitt durch den Randbereich einer von Bäumen eingerahmten Straße oder Parkfläche zeigt.

In einem schmalen, von Randsteinen 11 begrenzten Rasenstreifen 10 auf einem Parkplatz ist ein Baum 12 gepflanzt. Die angrenzenden Parkflächen sind mit Beton-Fertigsteinen 13 belegt, die auf einem Unterbau 14 unter Zwischenlage eines aus Übersichtlichkeitsgründen nicht dargestellten Sandbettes aufliegen.

Der Unterbau besteht überwiegend aus Schottersteinen 15, insbesondere gebrochenen Kalksteinen, die in der Zeichnung durch ihren eckigen Umriß und freie Innenflächen erkennbar sind. Dazwischen befinden sich Bruchsteine aus offenporiger Lava 16, die in der Zeichnung an den eingezeichneten Poren erkennbar sind. Weitere Bestandteile des Unterbau-Materials sind als punktierte Bereiche eingezeichnete Steinwolle 17 und in die Lücken zwischen den Steinen eingelagerter und beim Verdichten des Unterbaus 14 eingequetschter Rindenhumus 18 als organisches Material, dem auch organischer oder mineralischer Dünger zugesetzt sein kann. Der Rindenhumus ist durch schwarz ausgefüllte Schotterzwischenräume angedeutet.

Der Unterbau 14 kann in vorgefertigten Einbaueinheiten 19, die durch ein Drahtnetz 20 begrenzt sind und in denen das Unterbau-Material gleichmäßig vorgemischt angeordnet ist, angeliefert sein. Anstelle eines Drahtnetzes 20 können die Einbaueinheiten 19 beispielsweise auch von verrottbarer Sackleinwand umfangen sein.

Der Unterbau 14 mit seinem Zusatz von wasserhaltenden Lava-Bruchsteinen und hygroskopischer Steinwolle sowie mit seinem relativ geringen Zusatz an organischen Materialien, wie Rindenhumus oder Komposten, begünstigt das Eindringen von Baumwurzeln in den Bereich unterhalb der durch die Beton-Fertigsteine 13 abgedeckten Parkfläche und hilft dadurch zur Ausbildung eines guten und weitgehend gleichmäßig verteilten Baumwurzelstockes.

Der Volumenanteil oder Gewichtsanteil der einzelnen Mischungskomponenten des Unterbaus 14 kann stark variieren und wird unter Berücksichtigung der an der Einsatzstelle bestehenden geologischen und klimatischen Verhältnisse sowie unter Berücksichtigung der Pflanzen, die im Unterbau zusätzlich wurzeln sollen, gewählt.

## Patentansprüche

1. Material für den Unterbau von mit Bäumen eingefaßten Straßen, Wegen oder Parkflächen, wobei das Material überwiegend aus Schottersteinen (15) besteht und zur Erzielung einer guten Durchwurzelbarkeit den Schotterscheinen (15) Bruchsteine aus offenporiger Lava (16), Steinwolle (17) und in die Hohlräume des Schotterbettes verdichtbares organisches Material (18) beigefügt sind.

2. Material nach Anspruch 1, dadurch gekennzeichnet, daß als verdichtbares organisches Material (18) Rindenhumus beigefügt ist.

3. Material nach Anspruch 1 oder 2, dadurch gekennzeichnet, daß zusätzlich organischer und/oder mineralischer Dünger beigegeben ist.

4. Material nach einem der Ansprüche 1 bis 3, dadurch gekennzeichnet, daß es vorgemischt in von Draht (20) oder anderem Netzmaterial umschlossenen Einbaueinheiten (19) angeordnet ist.

5. Material nach einem der Ansprüche 1 bis 4, dadurch gekennzeichnet, daß der Volumenanteil von offenporiger Lava 10 - 30 %, der Volumenanteil von Steinwolle 5 - 10 % und der Anteil an organischem Material und Dünger maximal 5 % beträgt.

## Claims

1. A material for the foundation of roads, paths or parking areas bordered by trees, wherein the material predominantly consists of broken stones (15), and rubble stones comprising open-pored lava (16), rock wool (17), and, in the hollow spaces of the bed of broken stones, compactable organic material (18), are added to achieve a good rooting capacity of the broken stones (15).

2. A material according to claim 1, characterised in that bark humus is added as the compactable organic material (18).

3. A material according to claim 1 or 2, characterised in that organic and/or mineral fertiliser is added in addition.

4. A material according to any one of claims 1 to 3, characterised in that it is disposed pre-mixed in embedding units (19) enclosed by wire (20) or other mesh material.

5. A material according to any one of claims 1 to 4, characterised in that the volume fraction of open-pored lava is 10 - 30 %, the volume fraction of rock wool is 5 - 10 % and the maximum fraction of organic material and fertiliser is 5 %.

## Revendications

1. Matériau de fondation de chaussées, de chemins ou de surfaces de stationnement bordés d'arbres, le matériau étant constitué principalement de cailloux (15), et des fragments de lave à pores ouverts (16), de la laine minérale (17) et du matériau organique compressible (18) dans les creux du lit de cailloux étant ajoutés aux cailloux (15) pour un passage aisé de racines.

2. Matériau selon la revendication 1, caractérisé en ce que de l'humus d'écorce est ajouté comme matériau organique compressible (18).

3. Matériau selon la revendication 1 ou 2, caractérisé en ce que, en outre, de l'engrais organique et/ou minéral est ajouté.

4. Matériau selon l'une des revendications 1 à 3, caractérisé en ce qu'il est disposé pré-mélangé dans des unités encastrées (19) entourées de fil de fer (20) ou d'autre matériau de treillis.

5. Matériau selon l'une des revendications 1 à 4, caractérisé en ce que le pourcentage du volume de lave à pores ouverts est de 10 - 30 %, le pourcentage du volume de laine minérale de 5 - 10 % et le pourcentage de matériau organique et d'engrais de 5 % maximum.
